# EUROPÄISCHE PATENTSCHRIFT

(11) **EP 4 162 168 B1**
(45) Veröffentlichungstag und Bekanntmachung des Hinweises auf die Patenterteilung: **07.08.2024**
(21) Anmeldenummer: 21725447.3
(22) Anmeldetag: 05.05.2021
(51) Int. Cl.: F16C 11/06, F16C 41/00

(54) **KUGELGELENK FÜR EIN FAHRWERK EINES FAHRZEUGS SOWIE VERFAHREN ZUM HERSTELLEN EINES SOLCHEN KUGELGELENKS**
BALL JOINT FOR A CHASSIS OF A VEHICLE, AND METHOD FOR PRODUCING SUCH A BALL JOINT
JOINT À ROTULE CONÇU POUR UN CHÂSSIS D'UN VÉHICULE ET PROCÉDÉ POUR PRODUIRE UN TEL JOINT À ROTULE

(30) Priorität: 09.06.2020 DE 102020207191
(43) Veröffentlichungstag der Anmeldung: 12.04.2023
(73) Patentinhaber: ZF Friedrichshafen AG, 88046 Friedrichshafen (DE)
(72) Erfinder: BERGER, Artur, 49163 Bohmte (DE); RICHTER, Thomas, 49401 Damme (DE)
(74) Vertreter: ZF Friedrichshafen AG
(86) Internationale Anmeldenummer: PCT/EP2021/061855
(87) Internationale Veröffentlichungsnummer: WO 2021/249701

(56) Entgegenhaltungen:
- WO-A1-2007/009419
- DE-A1- 10 347 814
- DE-A1- 102016 215 416
- DE-A1- 102018 215 172
- JP-A- S6 217 421
- KR-A- 20050 022 159
- US-B2- 7 762 736

## Beschreibung

Die Erfindung betrifft ein Kugelgelenk für ein Fahrwerk eines Fahrzeugs mit einem Gelenkinnenteil und einer einstückigen Gleitlagerung aus Kunststoff, wobei eine Gelenkkugel des Gelenkinnenteils gelenkbeweglich in einem Kugellagerabschnitt der Gleitlagerung gelagert ist, und die Gleitlagerung einen Aufnahmeabschnitt und einen an dem Aufnahmeabschnitt angeordneten Sensorelement aufweist, wobei die Gleitlagerung an ihrer Außenseite eine kreisringförmige Anlagefläche aufweist, die koaxial zu einer Mittellängsachse der Gleitlagerung ausgebildet ist und die in axialer Richtung zur Mittellängsachse mit einem separaten Verschlussring zum Festsetzen der Gleitlagerung in einem Gelenkgehäuse zusammenwirkt. Des Weiteren betrifft die Erfindung ein Verfahren zum Herstellen eines solchen Kugelgelenks.

Ein derartiges Kugelgelenk ist aus der WO 2007/009419 A1 bekannt. Hierbei ist ein Kraftsensor beispielsweise in einer seitlichen Ausnehmung am Außenumfang der Gleitlagerung angeordnet. Eine Innenseite eines Verschlussringes liegt an einer zu der Gleitlagerung separat ausgebildeten Halterung für einen Magnetfeldsensor an.

Aus der DE 10 2019 204 659 A1 ist bekannt, dass das Kugelgelenk ein Verschlusselement aufweist, welches mehrere Durchbrüche hat. Durch die Durchbrüche des metallenen Verschlusselementes erstreckt sich das Kunststoffmaterial zum Ausbilden der Gleitlagerung. Hierdurch ist ein Hybridbauteil mit dem Verschlusselement aus Metall und der Gleitlagerung aus Kunststoff gebildet.

Der DE 10 2018 215 172 A1 sind Kugelgelenke mit Verschlusselementen zu entnehmen, wobei diese Verschlusselemente als Hybridbauteile aus einem Kunststoffteil und einem mindestens teilweise mit deem Kunststoffmaterial des Kunststoffteils umspritzten Einlegeteils beispielsweise aus Metall ausgebildet sind. Diese Verschlusselemente sind separat zur Gleitlagerung oder als separater Bestandteil einer mehrteiligen Gleitlagerung ausgebildet, wobei hier das jeweilige Verschlusselement eine Aufnahme zum Anordnen einer elektronischen Komponente aufweisen kann.

Hierbei ist von Nachteil, dass die Ausbildung des Verschlusselementes mit den mehreren Durchbrüchen aufwendig ist.

Es ist die der Erfindung zu Grunde liegende Aufgabe, ein Kugelgelenk und/oder ein Verfahren der eingangs Art derart weiterzuentwickeln, dass der Aufbau und/oder die Montage des Kugelgelenks vereinfacht ist. Vorzugsweise sollen möglichst viele Standardkomponenten, wie beispielsweise ein üblicher Verschlussring und/oder übliche Montageschritte, zum Herstellen des Kugelgelenks genutzt werden können. Des Weiteren ist wünschenswert, dass eine vorgegebene Ausrichtung des Sensorelementes in Bezug zum Gelenkgehäuse und/oder Gelenkinnenteil leichter, zuverlässiger und/oder besser reproduzierbar realisiert werden kann. Insbesondere soll eine alternative Ausführungsform bereitgestellt werden.

Die der Erfindung zu Grunde liegende Aufgabe wird mit einem Kugelgelenk nach Anspruch 1 und mittels eines Verfahrens nach Anspruch 10 gelöst. Bevorzugte Weiterbildungen der Erfindung finden sich in den Unteransprüchen und in der nachfolgenden Beschreibung.

Das Kugelgelenk ist für ein Fahrwerk eines Fahrzeugs, insbesondere eines Kraftfahrzeugs, ausgebildet. Vorzugsweise ist das Kugelgelenk ein Bestandteil eines Fahrwerks und/oder einer Fahrwerkkomponente. Im Fahrzeugbau kommen Kugelgelenke auf vielfältige Weise zum Einsatz. Insbesondere im Fahrwerk dienen Kugelgelenke dazu, Fahrwerkkomponenten, wie beispielsweise Lenkerbauteile, Radträger, Spurstangen oder dergleichen, gelenkig miteinander oder mit dem Fahrzeugaufbau bzw. einem daran befestigten Achsträger zu verbinden.

Das Kugelgelenk weist ein Gelenkinnenteil auf. Das Gelenkinnenteil kann beispielsweise als ein Kugelzapfen oder als eine Kugelhülse ausgebildet sein. Des Weiteren weist das Kugelgelenk eine Gleitlagerung auf. Die Gleitlagerung ist einstückig und aus Kunststoff gebildet. Hierbei ist eine Gelenkkugel des Gelenkinnenteils gelenkbeweglich in einem Kugellagerabschnitt der Gleitlagerung gelagert. Die Gleitlagerung und/oder der Kugellagerabschnitt kann wenigstens einseitig offen ausgebildet sein. Die Gleitlagerung, insbesondere der Kugellagerabschnitt der Gleitlagerung, kann ` zwischen dem Gelenkinnenteil und einem Gelenkgehäuse, insbesondere einer Gehäuseausnehmung des Gelenkgehäuses, angeordnet sein. Die Gehäuseausnehmung kann als eine Durchgangsöffnung des Gelenkgehäuses und/oder in einer Fahrwerkkomponente ausgebildet sein. Vorzugsweise liegt das Gelenkinnenteil bzw. die Gelenkkugel gleitbeweglich an der Gleitlagerung, insbesondere dem Kugellagerabschnitt, an. Des Weiteren weist die Gleitlagerung einen Aufnahmeabschnitt zum Anordnen, insbesondere Befestigen, eines Sensorelementes auf. Die Gleitlagerung weist an ihrer Außenseite eine kreisringförmige Anlagefläche auf, die koaxial zu einer Mittellängsachse der Gleitlagerung ausgebildet ist und die in axialer Richtung zur Mittellängsachse mit einem separaten, die Außenseite der Gleitlagerung umlaufenden Verschlussring zum Festsetzen der Gleitlagerung in einem Gelenkgehäuse zusammenwirkt.

Hierbei ist von Vorteil, dass ein üblicher Verschlussring verwendet werden kann. Insbesondere weist der Verschlussring keine Durchbrechung innerhalb seiner ringscheibenförmigen Kontur auf. Vorzugsweise umläuft bzw. umringt der Verschlussring die Außenseite der Gleitlagerung koaxial zur Mittellängsachse. Insbesondere dient der Verschlussring zum Verschließen des Gelenkgehäuses und/oder der Gehäuseausnehmung. Hierbei kann bereits ein Verschließen im Sinne der vorliegenden Anmeldung vorliegen, wenn eine Öffnung des Kugelgelenks und/oder Gelenkgehäuses mittels des Verschlussringes soweit reduziert oder verkleinert ist, dass das Gelenkinnenteil zuverlässig in der Gleitlagerung gehalten ist. Insbesondere dient der Verschlussring zum, vorzugsweise axialen, Sichern des Gelenkinnenteils in dem Gelenkgehäuse und/oder in der Gehäuseausnehmung. Somit kann der Verschlussring ein Herausfallen und/oder ein Ausziehen des Gelenkinnenteils aus dem Gelenkgehäuse zumindest bis zu einer vorgegebenen Ausziehkraft verhindern. Vorzugsweise ist der Verschlussring aus einem Metall gebildet. Insbesondere ist der Verschlussring als ein separates und/oder eigenständiges Bauteil ausgebildet.

In der Ausbildung des Gelenkinnenteils als ein Kugelzapfen weist das Gelenkinnenteil eine Gelenkkugel und einen Gelenkzapfen auf. Insbesondere erstreckt sich der Gelenkzapfen des Gelenkinnenteils aus einer Öffnung des Kugellagerabschnitts und/oder der Gehäuseausnehmung heraus. Vorzugsweise ermöglicht die Öffnung des Kugellagerabschnittes und/oder der Gehäuseausnehmung die gelenkige Beweglichkeit des Gelenkinnenteils in der Gleitlagerung bzw. in dem Kugellagerabschnitt. Zugleich kann der Durchmesser der Öffnung einen maximalen Kippwinkel des Gelenkinnenteils in Bezug zur Mittelängsachse vorgeben bzw. definieren. Insbesondere ist hat die Öffnung einen Durchmesser, der geringer ist als ein maximaler Außendurchmesser der Gelenkkugel. Die Öffnung des Kugellagerabschnittes und/oder der Gelenkzapfen sind vorzugsweise an einer von dem Aufnahmeabschnitt abgewandten Seite der Gleitlagerung angeordnet.

Insbesondere übernimmt der Kugellagerabschnitt vollständig die Funktion einer sonst üblichen separaten Lagerschale. Insbesondere umschließt und/oder umgreift der Kugellagerabschnitt teilweise die Gelenkkugel des Gelenkinnenteils. Insbesondere liegt eine Innenseite des Kugellagerabschnittes an einer Außenseite der Gelenkkugel an. Hierzu weist der Kugellagerabschnitt mindestens bereichsweise eine hohlkugelförmige Innenseite auf. Insbesondere ist die hohlkugelförmige Innenseite des Kugellagerabschnittes korrespondierend zur Außenseite der Gelenkkugel ausgebildet. Aufgrund eines insbesondere teilweisen Umschließens und/oder Umgreifens der Gelenkkugel mittels des Kugellagerabschnittes ist das Gelenkinnenteil bzw. die Gelenckugel formschlüssig in dem Kugellagerabschnitt gehalten. Der Kugellagerabschnitt, insbesondere die mindestens bereichsweise hohlkugelförmige Innenseite, kann sich ausgehend von einer Stirnseite und/oder Polfläche der Gelenkkugel in Richtung des Gelenkzapfens des Gelenkinnenteils über einen Äquator der Gelenkkugel hinaus erstrecken.

Vorzugsweise ist das Kugelgelenk, die Gleitlagerung und/oder der Verschlussring rotationssymmetrisch oder im Wesentlichen rotationssymmetrisch zur Mittellängsachse ausgebildet. Die Mittellängsachse kann durch einen Mittelpunkt, der, insbesondere kugelartigen oder kugelförmigen, Gelenkkugel des Gelenkinnenteils verlaufen.

Im Rahmen der vorliegenden Anmeldung kann der Ausdruck "radial" eine oder jedwede Richtung kennzeichnen, die senkrecht zur axialen Richtung des Kugelgelenks, des Gelenkinnenteils und/oder der Mittellängsachse der Gleitlagerung verläuft. Des Weiteren kann der Ausdruck "axial" eine oder jedwede Richtung kennzeichnen, die parallel zur axialen Richtung des Kugelgelenks, des Gelenkinnenteils und/oder der Mittellängsachse der Gleitlagerung verläuft.

Insbesondere ist unter einer bewegbaren und/oder gelenkbeweglichen Lagerung des Gelenkinnenteils in der Gleitlagerung eine Schwenkbeweglichkeit, Kippbeweglichkeit und/oder Drehbeweglichkeit zu verstehen. Vorzugsweise lässt eine gelenkige Verbindung keine translatorische Bewegung des Gelenkinnenteils in Bezug zu der Gleitlagerung und/oder dem Gelenkgehäuse zu. Unter "Kippen" des Gelenkinnenteils wird insbesondere eine Bewegung des Gelenkinnenteils relativ zu der Gleitlagerung und/oder dem Gelenkgehäuse verstanden, bei welcher eine Veränderung eines Winkels zwischen der Mittellängsachse und einer Längsachse des Gelenkinnenteils eintritt. Bevorzugt erfolgt das Kippen um einen Mittelpunkt des Gelenkinnenteils, vorzugsweise der Gelenkkugel des Gelenkinnenteils. Insbesondere wird unter "Drehen" des Gelenkinnenteils eine Bewegung des Gelenkinnenteils verstanden, bei welcher das Gelenkinnenteil relativ zu der Gleitlagerung und/oder zu dem Gelenkgehäuse um die Mittellängsachse und/oder um die Längsachse des Gelenkinnenteils gedreht wird.

Die einstückig ausgebildete Gleitlagerung mit dem Kugellagerabschnitt und dem Aufnahmeabschnitt ist insbesondere mittels eines Spritzgussverfahrens in einem einzigen Herstellungsschritt hergestellt. Das Sensorelement kann mittels des Aufnahmeabschnittes an der Gleitlagerung gehalten bzw. befestigt werden. Das Sensorelement kann mit einem weiteren Sensorelement zum Ausbilden einer Sensoreinrichtung zusammenwirken. Beispielsweise kann das weitere Sensorelement dem Gelenkinnenteil, insbesondere der Gelenkkugel, zugeordnet und/oder an diesem angeordnet sein. Vorzugsweise ist das weitere Sensorelement als ein Magnet ausgebildet. Insbesondere wird mittels der Sensoreinrichtung die Lage des Gelenkinnenteils in dem Kugelgelenk und in Bezug zum Gelenkgehäuse und/oder der Mittellängsachse der Gleitlagerung bestimmt. Beispielsweise kann eine entsprechende Sensoreinrichtung als eine Winkelsensoreinrichtung ausgebildet sein. Hierzu kann das Sensorelement einen Hall-Sensor zum Zusammenwirken mit dem Magneten der Gelenkkugel aufweisen.

Gemäß einer weiteren Ausbildung ist die kreisringförmige Anlagefläche mindestens teilweise von einem ringartigen Vorsprung der Gleitlagerung gebildet. Hierbei steht der ringartige Vorsprung radial zur Mittellängsachse von der Außenseite der Gleitlagerung nach außen vor. Insbesondere ist ein maximaler Außendurchmesser der Gleitlagerung mittels des ringartigen Vorsprungs definiert bzw. bestimmt. Vorzugsweise ist der ringartige Vorsprung Bestandteil der einstückig ausgebildeten Gleitlagerung. Des Weiteren kann der ringartige Vorsprung in einem korrespondierend ausgebildeten Rücksprung des Gelenkgehäuses und/oder der Gelenkausnehmung eingreifen. Der Rücksprung kann aufgrund einer Stufe in einer Innenseite der Gelenkausnehmung gebildet sein. Vorzugsweise wird die Gleitlagerung in die Gelenkausnehmung eingepresst. Hierbei endet die Einpressbewegung, sobald der ringartige Vorsprung in axialer Richtung zur Mittellängsachse der Gleitlagerung an den Rücksprung bzw. die stufenartige Kontur der Innenseite der Gehäuseausnehmung anschlägt.

Gemäß einer Weiterbildung steht der Verschlussring über eine Außenseite der Gleitlagerung, insbesondere über den ringartigen Vorsprung der Gleitlagerung, radial zur Mittellängsachse nach außen vor. Hierbei ist ein radial äußerer Rand des Verschlussringes formschlüssig in einer korrespondierend zum äußeren Rand ausgebildeten Nut festgesetzt. Insbesondere ist die Nut ein Bestandteil des Gelenkgehäuses. Hierbei kann die Nut in einer Innenseite der Gelenkausnehmung ausgebildet sein. Somit ist mittels des Verschlussringes die Gleitlagerung in axialer Richtung zur Mittellängsachse festgesetzt bzw. gesichert. Hierbei kann zum formschlüssigen Festsetzen des Verschlussringes und zum endgültigen Ausbilden der Nut zum Aufnehmen des äußeren Randes des Verschlussringes ein Gehäuserand des Gelenkgehäuses nach dem Anordnen des Verschlussringes auf der kreisringförmigen Anlagefläche der Gleitlagerung umgeformt werden. Diese Umformung kann beispielsweise mittels einer sogenannten Bördelung erfolgen.

Erfindungsgemäß liegt eine radial nach innen gerichtete Seite des Verschlussringes an einer Zylinderfläche der Außenseite der Gleitlagerung an. Insbesondere ist die nach innen gerichtete Seite des Verschlussringes vom radial äußeren Rand des Verschlussringes abgewandt. Erfindungsgemäß erstreckt sich die Zylinderfläche koaxial zur Mittellängsachse und/oder rechtwinklig von oder zu der kreisförmigen Anlagefläche. Somit liegt der Verschlussring sowohl an der kreisringförmigen Anlagefläche als auch an der Zylinderfläche der Gleitlagerung an. Hierbei sind die kreisringförmige Anlagefläche und die Zylinderfläche Bestandteile der Außenseite der Gleitlagerung.

Nach einer weiteren Ausführungsform weist die Zylinderfläche unmittelbar benachbart zur Anlagefläche eine Ringnut auf. Insbesondere ist die Ringnut koaxial zur Mittellängsachse der Gleitlagerung ausgebildet. In der Ringnut ist ein Dichtelement, insbesondere ein O-Ring, angeordnet. Vorzugsweise wirkt das Dichtelement mit der radial nach innen gerichteten Seite des Verschlussringes zusammen. Insbesondere wird das Dichtelement aufgrund des Verschlussringes in die Ringnut hineingepresst. Mittels des Dichtelements kann ein unerwünschtes Eindringen von Schmutz und/oder Feuchtigkeit in das Kugelgelenk und/oder in die Gleitlagerung vermieden werden.

Erfindungsgemäß ist der Aufnahmeabschnitt der Gleitlagerung ringartig ausgebildet. Insbesondere weist der Aufnahmeabschnitt einen im Wesentlichen kreisringförmigen Außenumfang auf. Vorzugsweise weist der Aufnahmeabschnitt mindestens einen radial zur Mittellängsachse nach außen vorstehenden Steg auf, der zum Ausbilden einer Schnapp- und/oder Rastverbindung mit mindestens einem korrespondierend ausgebildeten Rasthaken oder mehreren korrespondierend ausgebildeten Rasthaken des Sensorelementes zum lösbaren Festsetzen des Sensorelementes an dem Aufnahmeabschnitt zusammenwirkt. Insbesondere sind die mehreren Rasthaken derart zueinander angeordnet, dass sich eine ringartige oder kreisringförmige Struktur ergibt. Alternativ hierzu können die mehreren Rasthaken ringsegmentartig oder kreisringsegmentartig zueinander angeordnet sein. Vorzugsweise ergibt sich aufgrund der mehreren Rasthaken eine mindestens teilweise kreissegmentartige oder ringartige Außenkontur des Sensorelementes. Vorzugsweise ist das Sensorelement steckerartig ausgebildet. Ein erstes Ende des Sensorelementes kann mittels der Schnapp- und/oder Rastverbindung mit dem Aufnahmeabschnitt verbunden werden. Ein von dem ersten Ende abgewandtes zweites Ende des Sensorelementes kann mittels einer Leitung mit einer Auswerteeinheit verbunden sein oder werden.

Nach einer weiteren Ausführungsform ist koaxial und in axialer Richtung zur Mittellängsachse zwischen dem Aufnahmeabschnitt und dem Sensorelement eine Dichtung, insbesondere ein O-Ring, angeordnet. Insbesondere wird die Dichtung von mindestens einem Rasthaken oder mehreren Rasthaken des Sensorelementes umringt und/oder umfasst. Mittels der Dichtung kann ein Eindringen von Schmutz und/oder Feuchtigkeit zwischen dem Sensorelement und der Gleitlagerung verhindert werden.

Gemäß einer Weiterbildung weist das Sensorelement an seinem Außenumfang ein ringförmiges oder ringabschnittartiges Sicherungselement auf. Das Sicherungselement wirkt mit einer radial zur Mittellängsachse nach innen gerichteten Spannkraft und/oder Federkraft auf das Sensorelement. Mittels des Sicherungselementes kann einem unerwünschten und unbeabsichtigten Ablösen des Sensorelementes von dem Aufnahmeabschnitt der Gleitlagerung wirksam entgegengewirkt werden. Insbesondere wirkt das Sicherungselement mit der radial nach innen gerichteten Spannkraft und/oder Federkraft auf mindestens einen Rasthaken oder mehrere Rasthaken des Sensorelementes. Somit kann mittels des Sicherungselementes die Schnapp- und/oder Rastverbindung zwischen dem Sensorelement und dem Aufnahmeabschnitt zusätzlich abgesichert werden. Vorzugsweise weist der eine Rasthaken oder die mehreren Rasthaken jeweils eine Rille an ihrer Außenseite auf. In die Rille ist das Sicherungselement mindestens teilweise aufgenommen. Insbesondere sind die mehreren Rillen koaxial zur Mittellängsachse zueinander ausgerichtet und bilden gemeinsam einen ringartigen Rillenverbund, in dem das Sicherungselement mindestens teilweise aufgenommen ist. Das Sicherungselement kann als ein Runddrahtring, ein Spannring oder ein O-Ring ausgebildet sein. Hierbei kann es ausreichend sein, dass das Sicherungselement ein Ringsegment bildet und somit nicht als vollständiger Ring realisiert ist.

Vorzugsweise weist der Aufnahmeabschnitt mindestens einen Ausrichtabschnitt zum gerichteten Anordnen des Sensorelements an dem Aufnahmeabschnitt auf. Insbesondere ist mittels des Ausrichtabschnittes eine einzige Ausrichtung des Sensorelementes an dem Aufnahmeabschnitt vorgegeben. Somit ist mittels des Ausrichtabschnittes eine bestimmte Lage des Sensorelementes in Bezug zur Gleitlagerung vorgegeben. Insbesondere wirkt der Ausrichtabschnitt mit einem korrespondierend ausgebildeten Montageabschnitt des Sensorelementes zusammen. Vorzugsweise wirken der Ausrichtabschnitt des Aufnahmeabschnittes und der Montageabschnitt des Sensorelementes formschlüssig miteinander zusammen. Der Ausrichtabschnitt kann mittels mindestens eines Ausschnittes in dem ringartigen Aufnahmeabschnitt ausgebildet sein. In den Ausschnitt kann ein korrespondierend ausgebildeter Montageabschnitt des Sensorelementes aufgenommen werden. Vorzugsweise weist der Ausrichtabschnitt zwei einander gegenüberliegende Ausschnitte in dem ringartigen Aufnahmeabschnitt auf. Hierbei ist der Montageabschnitt des Sensorelementes derart ausgebildet, dass dieser zum Anordnen des Sensorelementes an dem Aufnahmeabschnitt in beiden Ausschnitten aufgenommen wird. Alternativ kann der Ausrichtabschnitt mittels mindestens einer am Außenumfang des ringartigen Aufnahmeabschnittes angeordneten Erhebung ausgebildet sein. Insbesondere ist die Erhebung als ein Vorsprung oder eine Nase ausgebildet. Der korrespondierend hierzu ausgebildete Montageabschnitt kann eine Kontur aufweisen, die beim Anordnen des Sensorelementes an dem Aufnahmeabschnitt die Erhebung aufnimmt und/oder mindestens teilweise umgreift.

Gemäß einer Weiterbildung weist der ringartige Aufnahmeabschnitt mehrere radial zur Mittellängsachse nach innen gerichtete Verstärkungsrippen auf. Die Verstärkungsrippen können rampenartig ausgebildet sein. Hierbei kann eine Höhe, insbesondere eine in axialer Richtung zur Mittellängsachse gesehene Höhe, der rampenartigen Verstärkungsrippen ausgehend von einer Innenseite des Aufnahmeabschnittes und radial in Richtung zur Mittellängsachse hin abnehmen. Mittels dieser Verstärkungsrippen wird eine bessere Formstabilität der Gleitlagerung, insbesondere des Aufnahmeabschnittes, gewährleistet.

Von besonderem Vorteil ist ein Verfahren zum Herstellen eines erfindungsgemäßen Kugelgelenks, wobei die Gleitlagerung unter Berücksichtigung einer vorgegebenen Hauptwinkelausschlagrichtung des Gelenkinnenteils in Bezug zum Gelenkgehäuse gerichtet in eine Gehäuseausnehmung des Gelenkgehäuses eingepresst wird. Aufgrund der gerichteten Anordnung der Gleitlagerung in der Gehäuseausnehmung ist bereits die Ausrichtung des erst später zu montierenden Sensorelementes vorgegeben. Hierbei ist aufgrund des Presssitzes der Gleitlagerung in der Gehäuseausnehmung gewährleistet, dass sich die Gleitlagerung nicht um die Mittellängsachse verdrehen kann. Nach dem Einpressen der Gleitlagerung wird ein separater Verschlussring zum axialen Festsetzen der Gleitlagerung eingepresst. Insbesondere gelangt der Verschlussring hierbei in Kontakt mit der kreisringförmigen Anlagefläche und der Zylinderfläche an der Außenseite der Gleitlagerung. Nachfolgend wird ein Gehäuserand des Gelenkgehäuses zum formschlüssigen Festsetzen des Verschlussringes umgeformt. Insbesondere ist hierdurch ein radial äußerer Rand des Verschlussringes in einer durch die Umformung ausgebildeten Nut des Gelenkgehäuses festgesetzt. Hieran anschließend wird das Sensorelement in einer mittels des Aufnahmeabschnittes, und insbesondere mit einem Ausrichtabschnitt, vorgegebenen Ausrichtung zum Gelenkgehäuse an dem Aufnahmeabschnitt befestigt.

Insbesondere handelt es sich bei dem gemäß dem erfindungsgemäßen Verfahren hergestellten Kugelgelenk um ein zuvor beschriebenes erfindungsgemäßes Kugelgelenk. Vorzugsweise ist das Verfahren gemäß den im Zusammenhang mit dem hier beschriebenen erfindungsgemäßen Kugelgelenk erläuterten Ausgestaltungen weitergebildet. Ferner kann das hier beschriebene Kugelgelenk gemäß den im Zusammenhang mit dem Verfahren erläuterten Ausgestaltungen weitergebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: einen Ausschnitt einer perspektivischen Seitenansicht eines ersten erfindungsgemäßen Kugelgelenks,
- Fig. 2: eine perspektivische Seitenansicht einer Gleitlagerung für das erste erfindungsgemäße Kugelgelenk gemäß Fig. 1,
- Fig. 3: eine geschnittene Seitenansicht des ersten erfindungsgemäßen Kugelgelenks gemäß Fig. 1,
- Fig. 4: einen Ausschnitt einer perspektivischen Seitenansicht eines weiteren erfindungsgemäßen Kugelgelenks,
- Fig. 5: eine Seitenansicht eines Sensorelementes für das weitere erfindungsgemäße Kugelgelenk gemäß Fig. 4,
- Fig. 6: eine geschnittene Seitenansicht des weiteren erfindungsgemäßen Kugelgelenks gemäß Fig. 4,
- Fig. 7: einen Ausschnitt aus der geschnittenen Seitenansicht des weiteren erfindungsgemäßen Kugelgelenks gemäß Fig. 6,
- Fig. 8: einen Ausschnitt einer weiteren teilweise geschnittenen Seitenansicht des weiteren erfindungsgemäßen Kugelgelenks gemäß Fig. 4, und
- Fig. 9: einen Ausschnitt einer perspektivischen Seitenansicht des weiteren erfindungsgemäßen Kugelgelenks ohne das Sensorelement.

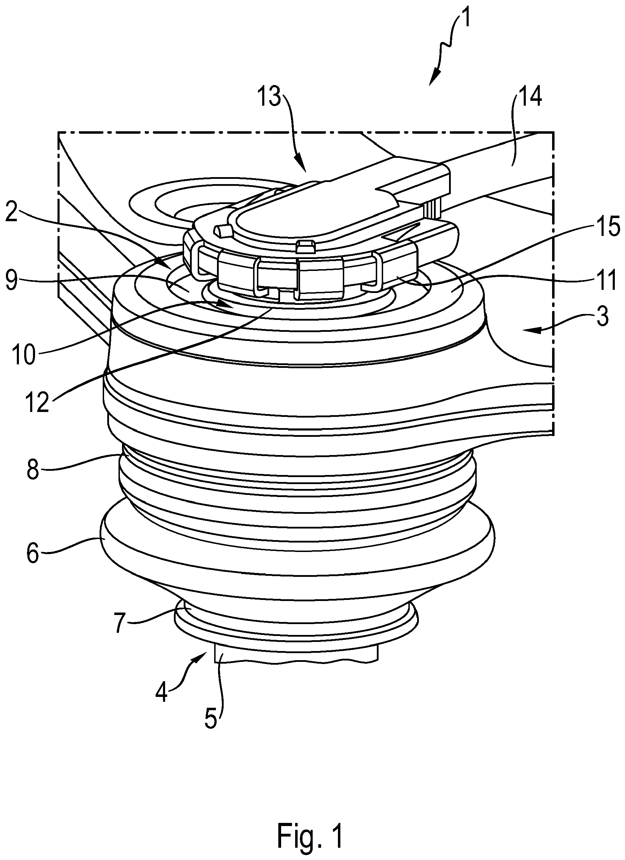

Figur 1 zeigt einen Ausschnitt einer perspektivischen Seitenansicht eines ersten erfindungsgemäßen Kugelgelenks 1. Das Kugelgelenk 1 ist bei diesem Ausführungsbeispiel als ein Kugelzapfengelenk ausgebildet. Des Weiteren ist das Kugelgelenk 1 in einer Gehäuseausnehmung 2 eines Gelenkgehäuses 3 angeordnet. Das Gelenkgehäuse 3 ist bei diesem Ausführungsbeispiel integraler Bestandteil einer Fahrwerckomponente, wobei die Fahrwerkkomponente hier beispielhaft als ein Lenker ausgebildet ist.

Das Kugelgelenk 1 weist ein Gelenkinnenteil 4 auf. Das Gelenkinnenteil 4 ist hier als ein Kugelzapfen ausgebildet. Entsprechend weist das Gelenkinnenteil 4 einen Gelenkzapfen 5 auf, der sich aus dem Gelenkgehäuse 3 nach außen heraus erstreckt. Zum Abdichten des Kugelgelenks 1 weist dieses einen Dichtungsbalg 6 auf. Der Dichtungsbalg 6 erstreckt sich zwischen dem Gelenkzapfen 5 und dem Gelenkgehäuse 3. Hierbei ist der Dichtungsbalg 6 sowohl gelenkzapfenseitig als auch gelenkgehäuseseitig jeweils mit einem Federring 7 bzw. 8 an dem Gelenkzapfen 5 bzw. an dem Gelenkgehäuse 3 gesichert.

Auf der von dem Gelenkzapfen 5 abgewandten Seite ist die Gehäuseausnehmung 2 mittels eines Verschlussringes 9 und einer Gleitlagerung 10 verschlossen. Hierbei ist der Verschlussring 9 aufgrund eines umgeformten Gehäuserandes 11 des Gelenkgehäuses 3 in der Gehäuseausnehmung 2 fixiert. Durch eine Mittenöffnung des Verschlussrings 9 erstreckt sich ein Aufnahmeabschnitt 12 der Gleitlagerung 10 nach außen.

An dem Aufnahmeabschnitt 12 ist ein Sensorelement 13 angeordnet bzw. befestigt. Das Sensorelement 13 ist bei diesem Ausführungsbeispiel im Wesentlichen steckerartig ausgebildet. Ausgehend von dem Sensorelement 13 erstreckt sich eine Leitung 14 bis zu einer hier nicht näher dargestellten Auswerteeinrichtung. Das Sensorelement 13 ist mittels einer Schnapp- und/oder Rastverbindung in axialer Richtung zur Mittellängsachse 19 auf dem Aufnahmeabschnitt 12 aufgesetzt und an diesem gehalten. Hierzu weist das Sensorelement 13 mehrere Rasthaken 15 auf. Zugunsten einer besseren Übersichtlichkeit sind nicht sämtliche Rasthaken 15 mit einem Bezugszeichen versehen. Die mehreren Rasthaken 15 sind gleichmäßig voneinander beabstandet. Des Weiteren sind die mehreren Rasthaken 15 bei diesem Ausführungsbeispiel halbkreisartig zueinander angeordnet. Hierbei bilden die Rasthaken 15 zugleich einen von der Leitung 14 abgewandten Teilbereich des Außenumfangs des Sensorelementes 13.

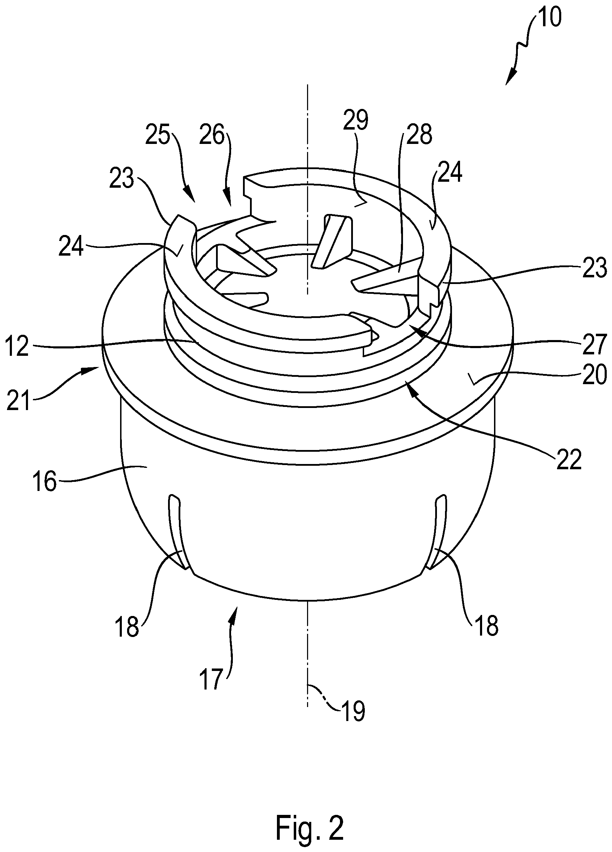

Figur 2 zeigt eine perspektivische Seitenansicht der Gleitlagerung 10 für das erste erfindungsgemäße Kugelgelenk 1 gemäß Figur 1. Die Gleitlagerung 10 ist aus dem Aufnahmeabschnitt 12 und einem Kugellagerabschnitt 16 gebildet. Auf der von dem Aufnahmeabschnitt 12 abgewandten Seite weist der Kugellagerabschnitt 16 eine Öffnung 17 auf. Durch die Öffnung 17 erstreckt sich das Gelenkinnenteil 4 gemäß Figur 1 nach außen heraus. Der Kugellagerabschnitt 16 weist mehrere Spalten 18 auf. Die mehreren Spalten 18 sind in Umfangsrichtung des Kugellagerabschnitts 16 gleichmäßig verteilt angeordnet. Des Weiteren erstrecken sich die Spalten 18 ausgehend von der Öffnung 17 parallel zu einer Mittellängsachse 19 der Gleitlagerung 10.

Die Spalten 18 erstrecken sich bis etwa in einen Äquatorbereich des Kugellagerabschnitts 16. Bei diesem Ausführungsbeispiel weist der Kugellagerabschnitt 16 insgesamt vier Spalte 18 auf.

Die Gleitlagerung 10 weist an ihrer Außenseite eine kreisringförmige Anlagefläche 20 auf. Die Anlagefläche 20 ist koaxial zur Mittellängsachse 19 ausgebildet und erstreckt sich radial zur Mittellängsachse 19. Des Weiteren ist die Anlagefläche 20 von dem Kugellagerabschnitt 16 abgewandt bzw. dem Aufnahmeabschnitt 12 zugewandt. Der Aufnahmeabschnitt 12 ist ringartig ausgebildet, wobei der Aufnahmeabschnitt 12 einen geringeren Außendurchmesser aufweist, als die Anlagefläche 20. Hierbei ist der Aufnahmeabschnitt 12 mittig zur Anlagefläche 20 bzw. zur Mittellängsachse 19 angeordnet.

Die kreisringförmige Anlagefläche 20 ist zumindest teilweise von einem ringartigen Vorsprung 21 der Gleitlagerung 10 ausgebildet. Hierbei steht der ringartige Vorsprung 21 radial zur Mittellängsachse 19 von der Außenseite der Gleitlagerung nach außen vor. Somit definiert bzw. bestimmt der Vorsprung 21 einen maximalen Außendurchmesser der Gleitlagerung 10.

Der Aufnahmeabschnitt 12 weist eine Zylinderfläche 22 auf, die sich koaxial zur Mittellängsachse 19 und bei diesem Ausführungsbeispiel rechtwinklig zu der kreisringförmigen Anlagefläche 20 weg erstreckt.

Zum Anordnen des Sensorelementes 13 an dem Aufnahmeabschnitt 12 gemäß Figur 1 weist der Aufnahmeabschnitt einen radial zur Mittellängsachse 19 nach außen vorstehenden Steg 23 auf. Bei diesem Ausführungsbeispiel weist der Aufnahmeabschnitt 12 zwei Stege 23 auf. Die beiden Stege 23 sind bei diesem Ausführungsbeispiel als spiegelsymmetrisch zueinander angeordnete Kreisringsegmente ausgebildet. Zugleich bilden die Stege 23 jeweils eine Stirnfläche 24 des Aufnahmeabschnitts 12. Die Stirnflächen 24 sind in axialer Richtung zur Mittellängsachse 19 von dem Kugellagerabschnitt 16 weggerichtet.

Der Aufnahmeabschnitt 12 weist einen Ausrichtabschnitt 25 zum gerichteten Anordnen des Sensorelementes 13 an dem Aufnahmeabschnitt 12 gemäß Figur 1 auf. Der Ausrichtabschnitt 25 ist bei diesem Ausführungsbeispiel mittels zweier einander gegenüberliegender Ausschnitte 26, 27 gebildet. Aufgrund der Ausschnitte 26, 27 sind die beiden Stege 23 voneinander getrennt.

Der Aufnahmeabschnitt 12 ist im Wesentlichen ringartig ausgebildet und weist mehrere radial zur Mittellängsachse 19 nach innen gerichtete Verstärkungsrippen 28 auf. Zugunsten einer besseren Übersichtlichkeit sind nicht sämtliche Verstärkungsrippen 28 mit einem Bezugszeichen versehen. Die Verstärkungsrippen 28 sind jeweils rampenartig ausgebildet. Hierbei nimmt eine Höhe der rampenartigen Verstärkungsrippe 28 ausgehend von einer Innenseite 29 des Aufnahmeabschnittes 12 und radial in Richtung zur Mittellängsachse 19 hin ab.

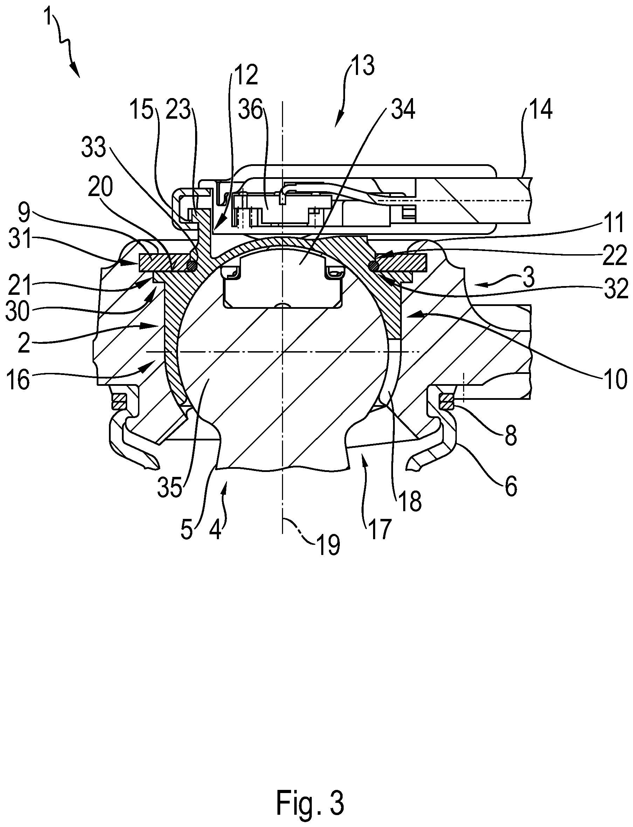

Figur 3 zeigt eine geschnittene Seitenansicht des ersten erfindungsgemäßen Kugelgelenks 1 gemäß Figur 1. Der ringartige Vorsprung 21 der Gleitlagerung 10 greift in einem korrespondierend ausgebildeten Rücksprung 30 des Gelenkgehäuses 3 bzw. der Gehäuseausnehmung 2 ein. Der Rücksprung 30 ist bei diesem Ausführungsbeispiel stufenartig ausgebildet.

Der Verschlussring 9 steht über eine Außenseite der Gleitlagerung 10 radial zur Mittellängsachse 19 nach außen vor. Hierbei ist ein radial äußerer Rand des Verschlussringes 9 formschlüssig in einer korrespondierend zum äußeren Rand des Verschlussringes 9 ausgebildeten Nut 31 festgesetzt. Die Nut 31 ist ringartig ausgebildet und an der Innenseite der Gehäuseausnehmung 2 angeordnet bzw. ausgebildet. Die hier dargestellte Ausbildung der Nut 31 ergibt sich nach dem Einsetzen des Verschlussringes 9 und einem Umformen des Gehäuserandes 11, so dass sich die hier gezeigte Gestalt ergibt.

Die Zylinderfläche 22 des Aufnahmeabschnitts 12 weist unmittelbar benachbart zur Anlagefläche 20 eine Ringnut 32 auf. In der Ringnut 32 ist ein Dichtelement 33 angeordnet. Das Dichtelement 33 ist bei diesem Ausführungsbeispiel als ein O-Ring ausgebildet. Hierbei wirkt das Dichtelement 33 mit der radial nach innen gerichteten Seite des Verschlussringes 9 zusammen. Mittels des Dichtelementes 33 ist ein unerwünschtes Eindringen von Schmutz und/oder Feuchtigkeit in das Kugelgelenk 1 verhindert.

Bei diesem Ausführungsbeispiel ist das Sensorelement 13 zum Zusammenwirken mit einem weiteren Sensorelement 34 ausgebildet. Das Sensorelement 13 und das weitere Sensorelement 34 bilden eine Sensoreinrichtung. Bei diesem Ausführungsbeispiel ist das weitere Sensorelement 34 als ein Magnet ausgebildet und in eine Gelenkkugel 35 des Gelenkinnenteils 4 integriert. Die Gelenkkugel 35 ist gelenkbeweglich in dem Kugellagerabschnitt 16 gelagert. Das weitere Sensorelement 34 ist in einem von dem Gelenkzapfen 5 abgewandten und dem Aufnahmeabschnitt 12 zugewandten Bereich der Gelenkkugel 35 angeordnet.

Das Sensorelement 13 weist bei diesem Ausführungsbeispiel einen Hall-Sensor 36 auf. Somit ist bei diesem Ausführungsbeispiel die aus dem Sensorelement 13 und dem weiteren Sensorelement 34 gebildete Sensoreinrichtung als eine Winkelsensoreinrichtung realisiert, mittels derer die Lage des Gelenkinnenteils 4 in Bezug zum Gelenkgehäuse 3 bzw. der Gleitlagerung 10 bestimmt werden kann.

Die Gleitlagerung 10, bestehend aus dem Aufnahmeabschnitt 12 und dem Kugellagerabschnitt 16 ist aus einem Kunststoff und einstückig ausgebildet. Der Verschlussring 9 ist aus Metall hergestellt. Das Gelenkgehäuse 3 und die zugehörige Fahrwerckomponente ist ebenfalls aus Metall gebildet.

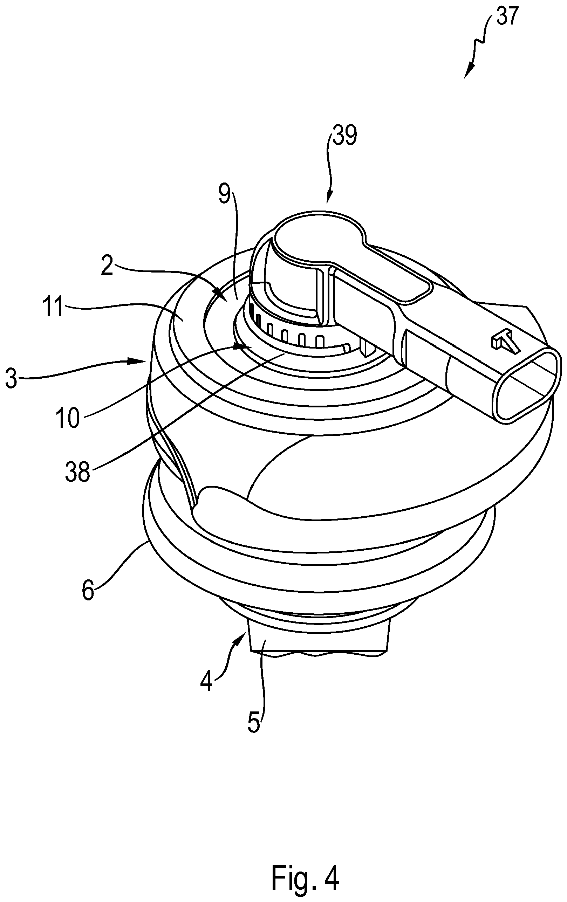

Figur 4 zeigt einen Ausschnitt einer perspektivischen Seitenansicht eines weiteren erfindungsgemäßen Kugelgelenks 37. Gleiche Merkmale wie zuvor tragen die gleichen Bezugszeichen. Insoweit wird auch auf die vorangegangene Beschreibung verwiesen. Das Kugelgelenk 37 ist wie das Kugelgelenk 1 gemäß Figuren 1 bis 3 ebenfalls als ein Kugelzapfengelenk ausgebildet. Entsprechend ist in einer Gehäuseausnehmung 2 eines Gelenkgehäuses 3 ein Gelenkinnenteil 4 in Ausbildung eines Kugelzapfens angeordnet. Die Gleitlagerung 10 weist bei diesem Ausführungsbeispiel einen Aufnahmeabschnitt 38 auf, an dem ein Sensorelement 39 mittels einer Schnapp- und/oder Rastverbindung befestigt ist. Der Aufbau des Aufnahmeabschnitts 38 und des Sensorelementes 39 wird anhand der nachfolgenden Figuren näher beschrieben.

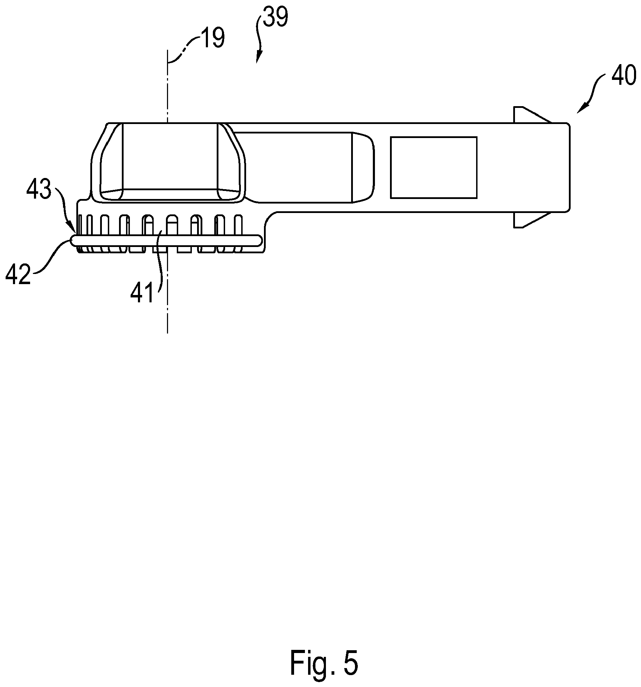

Figur 5 zeigt eine Seitenansicht des Sensorelementes 39 für das weitere erfindungsgemäße Kugelgelenk 37 gemäß Figur 4. Das Sensorelement 39 ist ähnlich dem Sensorelement 13 gemäß Figuren 1 bis 3 steckerartig ausgebildet. Hierbei kann ein freies Endes 40 des Sensorelementes 39 mittels einer hier nicht näher dargestellten Leitung an eine Auswerteeinheit angeschlossen werden. Zum Anordnen des Sensorelementes 39 an den Aufnahmeabschnitt 38 gemäß Figur 4 weist das Sensorelement mehrere Rasthaken 41 auf. Für eine bessere Übersichtlichkeit sind nicht sämtliche Rasthaken 41 mit einem Bezugszeichen versehen. Die mehreren Rasthaken 41 sind gleichmäßig voneinander beabstandet und bilden gemeinsam eine kreisringartige oder kreisringsegmentartige Gestalt.

Des Weiteren weist das Sensorelement 39 bei diesem Ausführungsbeispiel im Bereich der Rasthaken 41 an seinem Außenumfang ein ringförmiges oder ringabschnittartiges Sicherungselement 42 auf. Das Sicherungselement 42 umgreift bzw. umschlingt die mehreren Rasthaken 41, wobei das Sicherungselement 42 an einer Außenseite des jeweiligen Rasthakens 41 angeordnet ist. Hierbei wirkt das Sicherungselement 42 mit einer radial zur Mittellängsachse 19 gerichteten Spannkraft oder Federkraft auf das Sensorelement 39 bzw. die Rasthaken 41. Hierdurch wird die Schnapp- und/oder Rastverbindung zwischen dem Sensorelement 39 und dem Aufnahmeabschnitt 38 gemäß Figur 4 zusätzlich gesichert.

Die Rasthaken 41 weisen an ihrer Außenseite jeweils eine Rille 43 auf. In die Rillen 43 ist das Sicherungselement 42 zumindest teilweise aufgenommen und hierdurch positionsfest an den Rasthaken 41 angeordnet.

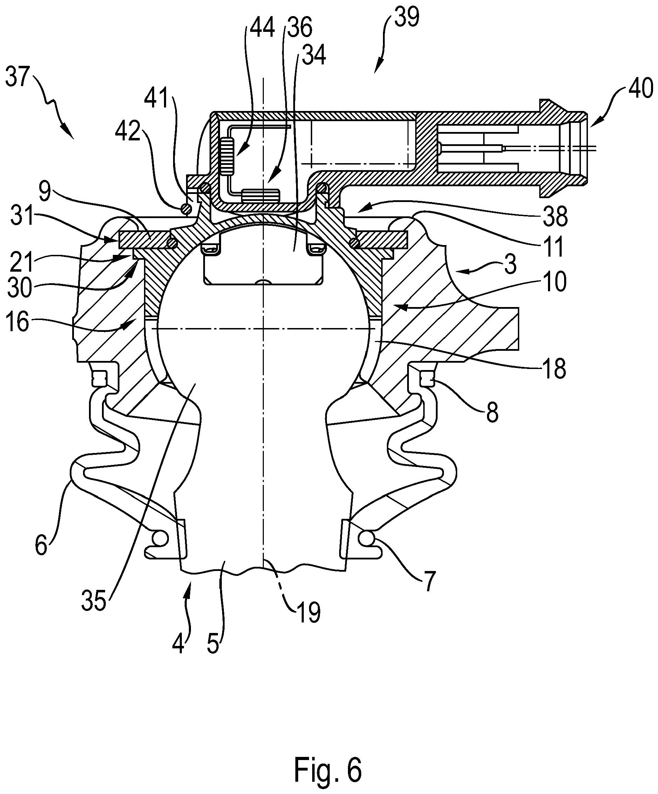

Figur 6 zeigt eine geschnittene Seitenansicht des weiteren erfindungsgemäßen Kugelgelenks 37 gemäß Figur 4. Die Gleitlagerung 10 weist zusätzlich zu dem Aufnahmeabschnitt 38 den Kugellagerabschnitt 16 auf. Der Kugellagerabschnitt 16, der Vorsprung 21, der Verschlussring 9 und deren Zusammenwirkung mit dem Gelenkgehäuse 3 und der Gehäuseausnehmung 2 sowie den Gehäuserand 11 entsprechen den Ausführungen zum Kugelgelenk 1 gemäß Figuren 1 bis 3. Insoweit wird auch auf die vorangegangene Beschreibung verwiesen.

Auch hier wirkt das Sensorelement 39 mit einem weiteren Sensorelement 34 in Gestalt eines Magnets in der Gelenkkugel 35 des Gelenkinnenteils 4 zusammen. Hierzu weist das Sensorelement 39 erneut einen Hall-Sensor 36 auf. Bei diesem Ausführungsbeispiel erstreckt sich ausgehend von dem Hall-Sensor 36 eine Elektronik 44 parallel zur Mittellängsachse 19. Möchte man für eine alternative Ausführungsform ein in axialer Richtung zur Mittellängsachse 19 flacher ausgebildetes Sensorelement 39 realisieren, kann die Elektronik 44 statt parallel zur Mittellängsachse 19 in einem schrägen Winkel zur Mittellängsachse 19 angeordnet sein. Beispielsweise kann die Elektronik 44 in einem 65°-Winkel oder sogar in einem 90°-Winkel zur Mittellängsachse 19 angeordnet sein.

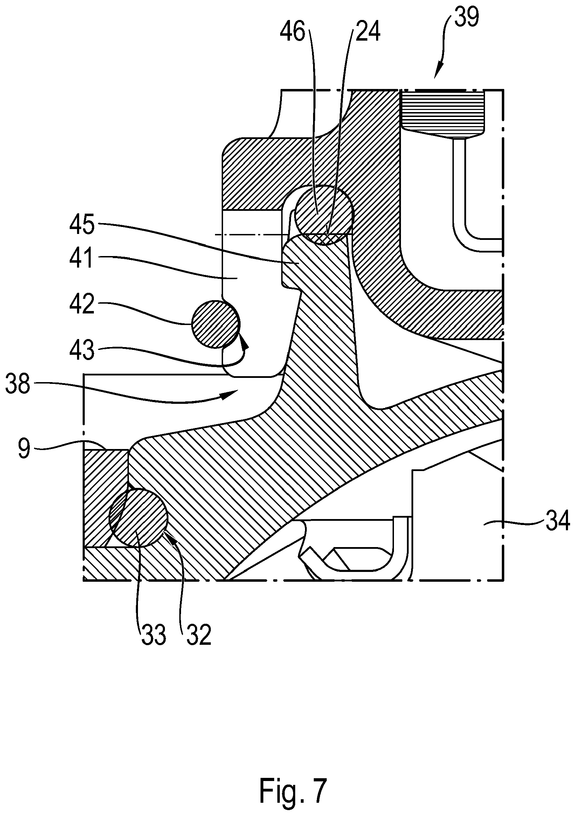

Figur 7 zeigt einen Ausschnitt aus der geschnittenen Seitenansicht des weiteren erfindungsgemäßen Kugelgelenks 37 gemäß Figur 6. Der Aufnahmeabschnitt 38 ist im Wesentlichen ringartig ausgebildet und weist einen radial zur Mittellängsachse 19 gemäß Figur 6 nach außen vorstehenden Steg 45 auf. Der Steg 45 wirkt zum Ausbilden der Schnapp- und/oder Rastverbindung mit den mehreren Rasthaken 41 des Sensorelementes 39 zum lösbaren Festsetzen des Sensorelementes 39 an dem Aufnahmeabschnitt 38 zusammen. Hierzu sind die Rasthaken 41 zumindest teilweise radial nach innen gerichtet, um mit den radial nach außen gerichtetem Steg 45 formschlüssig zusammenzuwirken.

Koaxial und in axialer Richtung zur Mittellängsachse 19 gemäß Figur 6 ist zwischen dem Aufnahmeabschnitt 38 und dem Sensorelement 39 eine Dichtung 46 angeordnet. Die Dichtung 46 ist bei diesem Ausführungsbeispiel als ein O-Ring ausgebildet. Des Weiteren wird die Dichtung 46 von den mehreren Rasthaken 41 umringt oder umfasst. Im Bereich der Dichtung 46 und zum Aufnehmen der Dichtung 46 weist der Aufnahmeabschnitt 38 einen im Wesentlichen U-förmigen Querschnitt auf. Hierbei stützt sich die Dichtung 46 auf der Stirnfläche 24 des Stegs 45 ab. Mittels der Dichtung 46 wird ein unerwünschtes Eindringen von Schmutz und/oder Feuchtigkeit zwischen dem Sensorelement 39 und der Gleitlagerung 10 bzw. dem Aufnahmeabschnitt 38 verhindert.

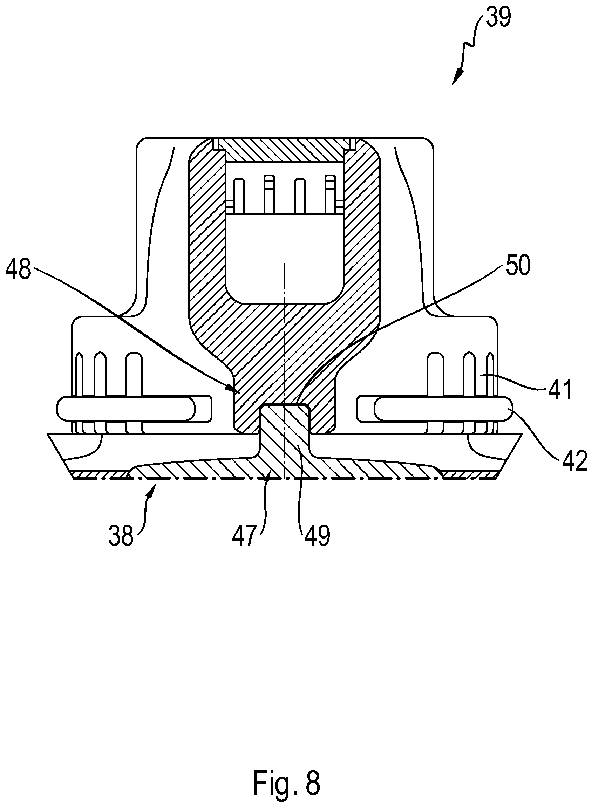

Figur 8 zeigt einen Ausschnitt einer weiteren teilweise geschnittenen Seitenansicht des weiteren erfindungsgemäßen Kugelgelenks 37 gemäß Figur 4. Hierbei ist die Blickrichtung ausgehend von dem freien Ende 40 des Sensorelementes 39 in Richtung der Schnapp- und/oder Rastverbindung zwischen dem Sensorelement 39 und dem Aufnahmeabschnitt 38. Hierbei ist zu erkennen, dass der Aufnahmeabschnitt 38 einen Ausrichtabschnitt 47 zum gerichteten Anordnen des Sensorelementes 39 an dem Aufnahmeabschnitt 38 aufweist. Der Ausrichtabschnitt 47 wirkt mit einem korrespondierend ausgebildeten Montageabschnitt 48 des Sensorelementes 39 zusammen. Bei diesem Ausführungsbeispiel ist der Ausrichtabschnitt 47 mittels einer vorsprungartigen Erhebung 49 gebildet. Der Montageabschnitt 48 weist bei diesem Ausführungsbeispiel eine korrespondierend zu der Erhebung 49 ausgebildete Aufnahme 50 auf, in die die Erhebung 49 eingreift. Aufgrund des Zusammenwirkens des Ausrichtabschnittes 47 und des Montageabschnittes 48 ist die Ausrichtung des Sensorelementes 39 in Bezug zur Gleitlagerung 10 bzw. des Gelenkgehäuses 3 gemäß Figur 6 vorgegeben.

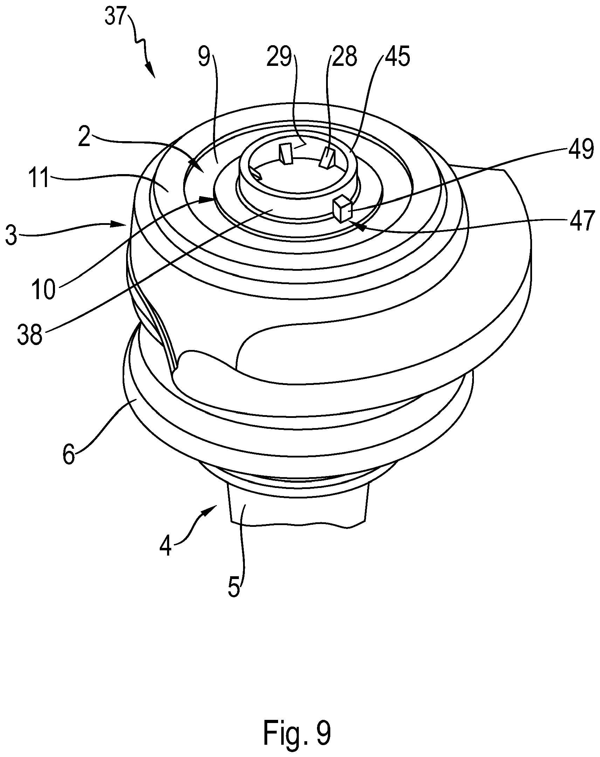

Figur 9 zeigt einen Ausschnitt einer perspektivischen Seitenansicht des weiteren erfindungsgemäßen Kugelgelenks 37 ohne das Sensorelement 39. Gut zu erkennen ist hier der kreisringartig ausgebildete Steg 45 und der Ausrichtabschnitt 47 mit der vorsprungartig radial nach außen hervorstehenden Erhebung 49. Wie bei dem Aufnahmeabschnitt 12 gemäß Figur 2 weist auch der Aufnahmeabschnitt 38 mehrere Verstärkungsrippen 28 auf, die rampenartig ausgebildet sind und sich ausgehend von der Innenseite 29 radial in Richtung zur Mittellängsachse 19 erstrecken.

Zum Herstellen des Kugelgelenks 1 bzw. 37 wird die Gleitlagerung 10 unter Berücksichtigung einer vorgegebenen Hauptwinkelausschlagrichtung des Gelenkinnenteils 4 in Bezug zum Gelenkgehäuse 3 gerichtet in die Gehäuseausnehmung 2 des Gelenkgehäuses 3 eingepresst. Hierbei erfolgt das Einpressen der Gleitlagerung 10 mit der Öffnung 17 voran in axialer Richtung der Mittellängsachse 19. Der Einpressvorgang ist abgeschlossen, sobald der Vorsprung 21 der Gleitlagerung 10 an den stufenartigen Rücksprung 30 des Gelenkgehäuses 3 bzw. der Gehäuseausnehmung 2 anschlägt. Anschließend wird der separate Verschlussring 9 zum axialen Festsetzen der Gleitlagerung 10 in die Gehäuseausnehmung 2 eingepresst. Hierbei wird der Verschlussring 9 soweit in axialer Richtung der Mittellängsachse 19 in Richtung der Gleitlagerung 10 eingepresst, bis der Verschlussring 9 auf der Anschlagfläche 20 der Gleitlagerung 10 zu liegen kommt. Hierbei gelangt zugleich eine radial nach innen gerichtete Seite des Verschlussrings 9 an die Zylinderfläche 22. Nachfolgend wird der Gehäuserand 11 zum formschlüssigen Festsetzen des Verschlussringes 9 umgeformt. Hierdurch ist die Nut 31 gebildet, in der der radial äußere Rand des Verschlussringes 9 formschlüssig festgesetzt ist. Schließlich wird das Sensorelement 13 bzw. 39 in der mittels des Aufnahmeabschnittes 12 bzw. 38 vorgegebenen Ausrichtung zum Gelenkgehäuse 3 an dem Aufnahmeabschnitt 12 bzw. 38 befestigt. Hierbei ergibt sich die vorgegebene Ausrichtung des Sensorelementes 13 bzw. 39 aufgrund des Ausrichtabschnittes 25 bzw. 47 des Aufnahmeabschnittes 12 bzw. 38. Die Ausrichtung des Ausrichtabschnittes 25 bzw. 47 ergibt sich wiederum bereits aufgrund der gerichtet eingepressten Gleitlagerung 10.

### Bezugszeichen

- 1: Kugelgelenk
- 2: Gehäuseausnehmung
- 3: Gelenkgehäuse
- 4: Gelenkinnenteil
- 5: Gelenkzapfen
- 6: Dichtungsbalg
- 7: Federring
- 8: Federring
- 9: Verschlussring
- 10: Gleitlagerung
- 11: Gehäuserand
- 12: Aufnahmeabschnitt
- 13: Sensorelement
- 14: Leitung
- 15: Rasthaken
- 16: Kugellagerabschnitt
- 17: Öffnung
- 18: Spalt
- 19: Mittellängsachse
- 20: Anlagefläche
- 21: Vorsprung
- 22: Zylinderfläche
- 23: Steg
- 24: Stirnfläche
- 25: Ausrichtabschnitt
- 26: Ausschnitt
- 27: Ausschnitt
- 28: Verstärkungsrippe
- 29: Innenseite
- 30: Rücksprung
- 31: Nut
- 32: Ringnut
- 33: Dichtelement
- 34: weiteres Sensorelement (Magnet)
- 35: Gelenkkugel
- 36: Hall-Sensor
- 37: Kugelgelenk
- 38: Aufnahmeabschnitt
- 39: Sensorelement
- 40: freies Ende
- 41: Rasthaken
- 42: Sicherungselement
- 43: Rille
- 44: Elektronik
- 45: Steg
- 46: Dichtung
- 47: Ausrichtabschnitt
- 48: Montageabschnitt
- 49: Erhebung
- 50: Aufnahme

## Patentansprüche

1. Kugelgelenk für ein Fahrwerk eines Fahrzeugs mit einem Gelenkinnenteil (4) und einer einstückigen Gleitlagerung (10) aus Kunststoff, wobei eine Gelenkkugel (35) des Gelenkinnenteils (4) gelenkbeweglich in einem Kugellagerabschnitt (16), der Gleitlagerung (10) gelagert ist, und die Gleitlagerung (10) einen Aufnahmeabschnitt (12, 38) und ein an dem Aufnahmeabschnitt angeordnetes Sensorelement (13, 39) aufweist, wobei die Gleitlagerung (10) an ihrer Außenseite eine kreisringförmige Anlagefläche (20) aufweist, die koaxial zu einer Mittellängsachse (19) der Gleitlagerung (10) ausgebildet ist und die in axialer Richtung zur Mittellängsachse (19) mit einem separaten Verschlussring (9) zum Festsetzen der Gleitlagerung (10) in einem Gelenkgehäuse (3) zusammenwirkt, **dadurch gekennzeichnet, dass** der separate Verschlussring (9) die Außenseite der Gleitlagerung (10) umläuft und sich der ringartig ausgebildete Aufnahmeabschnitt (12, 38) durch eine Mittenöffnung des Verschlussringes (9) nach außen erstreckt und eine radial nach innen gerichtete Seite des Verschlussringes (9) an einer Zylinderfläche (22) der Außenseite der Gleitlagerung (10) anliegt, wobei sich die Zylinderfläche (22) koaxial zur Mittellängsachse (19) und/oder rechtwinklig von und/oder zu der kreisringförmigen Anlagefläche (20) erstreckt.

2. Kugelgelenk nach Anspruch 1, **dadurch gekennzeichnet, dass** die kreisringförmige Anlagefläche (20) mindestens teilweise von einem ringartigen Vorsprung (21) gebildet ist, wobei der ringartige Vorsprung (21) radial zur Mittellängsachse (19) von der Außenseite der Gleitlagerung (10) nach außen vorsteht, insbesondere greift der ringartige Vorsprung (21) in einen korrespondierend ausgebildeten Rücksprung (30) des Gelenkgehäuses (3) ein.

3. Kugelgelenk nach Anspruch 1 oder 2, **dadurch gekennzeichnet, dass** der Verschlussring (9) über eine Außenseite der Gleitlagerung (10) radial zur Mittellängsachse (19) nach außen vorsteht und ein radial äußerer Rand des Verschlussringes (9) formschlüssig in einer korrespondierend zum äußeren Rand ausgebildeten Nut (31) festgesetzt ist.

4. Kugelgelenk nach Anspruch 3, **dadurch gekennzeichnet, dass** die Zylinderfläche (22) unmittelbar benachbart zur Anlagefläche (20) eine Ringnut (32) aufweist, wobei in der Ringnut (32) ein Dichtelement (33), insbesondere ein O-Ring, angeordnet ist, vorzugsweise wirkt das Dichtelement (33) mit der radial nach innen gerichteten Seite des Verschlussringes (9) zusammen.

5. Kugelgelenk nach einem der vorhergehenden Ansprüche, **dadurch gekennzeichnet, dass** der Aufnahmeabschnitt (12, 38) mindestens einen radial zur Mittellängsachse (19) nach außen vorstehenden Steg (23, 45) aufweist, der zum Ausbilden einer Schnapp- und/oder Rastverbindung mit mindestens einer oder mehreren korrespondierend ausgebildeten Rasthaken (15, 41) des Sensorelementes (13, 39) zum lösbaren Festsetzen des Sensorelementes (13, 39) an dem Aufnahmeabschnitt (12, 38) zusammenwirkt.

6. Kugelgelenk nach einem der vorhergehenden Ansprüche, **dadurch gekennzeichnet, dass** koaxial und in axialer Richtung zur Mittellängsachse (19) zwischen dem Aufnahmeabschnitt (12, 38) und dem Sensorelement (13, 39) eine Dichtung (46), insbesondere ein O-Ring, angeordnet ist, insbesondere wird die Dichtung (46) von mindestens einer oder mehreren Rasthaken (15, 41) des Sensorelementes (13, 39) umring und/oder umfasst.

7. Kugelgelenk nach einem der vorhergehenden Ansprüche, **dadurch gekennzeichnet, dass** das Sensorelement (13, 39) an seinem Außenumfang ein ringförmiges oder ringabschnittartiges Sicherungselement (42) aufweist, das mit einer radial zur Mittelelängsachse (19) nach innen gerichteten Spannkraft oder Federkraft auf das Sensorelement (13, 39), insbesondere auf mindestens eine oder mehrere Rasthaken (15, 41) des Sensorelementes (13, 39), zum Sichern einer Schnapp- und/oder Rastverbindung zwischen dem Sensorelement (13, 39) und dem Aufnahmeabschnitt (12, 38) wirkt, vorzugsweise weist die eine oder die mehreren Rasthaken (15, 41) jeweils eine Rille (43) an ihrer Außenseite auf, in der das Sicherungselement (42) mindestens teilweise aufgenommen ist.

8. Kugelgelenk nach einem der vorhergehenden Ansprüche, **dadurch gekennzeichnet, dass** der Aufnahmeabschnitt (12, 38) mindestens einen Ausrichtabschnitt (25, 47) zum gerichteten Anordnen des Sensorelements (13, 39) an dem Aufnahmeabschnitt (12, 38) aufweist, wobei der Ausrichtabschnitt (25, 47) mit einem korrespondierend ausgebildeten Montageabschnitt (48) des Sensorelementes (13, 39) zusammenwirkt, insbesondere ist der Ausrichtabschnitt (25, 47) mittels mindestens eines Ausschnittes (26, 27) in dem ringartigen Aufnahmeabschnitt (12) oder mittels mindestens einer am Außenumfang des ringartigen Aufnahmeabschnittes (38) angeordneten Erhebung (49) ausgebildet.

9. Kugelgelenk nach einem der vorhergehenden Ansprüche, **dadurch gekennzeichnet, dass** der ringartige Aufnahmeabschnitt (12, 38) mehrere radial zur Mittellängsachse (19) nach innen gerichtete Verstärkungsrippen (28) aufweist, insbesondere sind die Verstärkungsrippen (28) rampenartig ausgebildet, wobei eine Höhe der rampenartigen Verstärkungsrippen (28) ausgehend von einer Innenseite des Aufnahmeabschnittes (12, 38) und radial in Richtung zur Mittellängsachse (19) hin abnimmt.

10. Verfahren zum Herstellen eines Kugelgelenks (1, 37) nach einem der vorhergehenden Ansprüche, wobei die Gleitlagerung (10) unter Berücksichtigung einer vorgegebenen Hauptwinkelausschlagrichtung des Gelenkinnenteils (4) in Bezug zum Gelenkgehäuse (3) gerichtet in eine Gehäuseausnehmung (2) des Gelenkgehäuses (3) eingepresst wird, anschließend wird ein separater Verschlussring (9) zum axialen Festsetzen der Gleitlagerung (10) eingepresst, nachfolgend wird ein Gehäuserand (11) zum formschlüssigen Festsetzen des Verschlussringes (9) umgeformt, und hieran anschließend wird das Sensorelement (13, 39) in einer mittels des Aufnahmeabschnittes (12, 38) vorgegebenen Ausrichtung zum Gelenkgehäuse (3) an dem Aufnahmeabschnitt (12, 38) befestigt.

## Claims

1. Ball joint for a chassis of a vehicle, comprising a joint inner part (4) and a one-piece sliding bearing (10) composed of plastic, wherein a joint ball (35) of the joint inner part (4) is mounted for articulation movement in a ball bearing portion (16) of the sliding bearing (10), and the sliding bearing (10) has a receiving portion (12, 38) and a sensor element (13, 39) arranged on the receiving portion, wherein the sliding bearing (10) has, on its outer face, a circular ring-shaped contact surface (20) which is formed coaxially with a central longitudinal axis (19) of the sliding bearing (10) and which interacts, in an axial direction with respect to the central longitudinal axis (19), with a separate closure ring (9) for fixing the sliding bearing (10) in a joint housing (3), **characterized in that** the separate closure ring (9) encircles the outer face of the sliding bearing (10) and the ring-like receiving portion (12, 38) extends outward through a central opening in the closure ring (9) and a radially inwardly directed face of the closure ring (9) bears against a cylindrical surface (22) of the outer face of the sliding bearing (10), wherein the cylindrical surface (22) extends coaxially with the central longitudinal axis (19) and/or at a right angle from and/or to the circular ring-shaped contact surface (20).

2. Ball joint according to Claim 1, **characterized in that** the circular ring-shaped contact surface (20) is at least partially formed by a ring-like projection (21), wherein the ring-like projection (21) protrudes outward from the outer face of the sliding bearing (10) radially with respect to the central longitudinal axis (19), in particular the ring-like projection (21) engages into a correspondingly formed recess (30) in the joint housing (3) .

3. Ball joint according to Claim 1 or 2, **characterized in that** the closure ring (9) projects outward radially with respect to the central longitudinal axis (19) over an outer face of the sliding bearing (10) and a radially outer edge of the closure ring (9) is fixed in a positive-locking manner in a groove (31) formed in a manner corresponding to the outer edge.

4. Ball joint according to Claim 3, **characterized in that** the cylindrical surface (22) has an annular groove (32) directly adjacent to the contact surface (20), wherein a sealing element (33), in particular an O-ring, is arranged in the annular groove (32), preferably the sealing element (33) interacts with the radially inwardly directed face of the closure ring (9).

5. Ball joint according to any of the preceding claims, **characterized in that** the receiving portion (12, 38) has at least one web (23, 45) which protrudes outward radially with respect to the central longitudinal axis (19) and, in order to form a snap-action and/or latching connection, interacts with at least one or more correspondingly formed latching hooks (15, 41) of the sensor element (13, 39) for releasably fixing the sensor element (13, 39) to the receiving portion (12, 38).

6. Ball joint according to any of the preceding claims, **characterized in that** a seal (46), in particular an O-ring, is arranged coaxially and in the axial direction with respect to the central longitudinal axis (19) between the receiving portion (12, 38) and the sensor element (13, 39), in particular the seal (46) is surrounded and/or enclosed by at least one or more latching hooks (15, 41) of the sensor element (13, 39).

7. Ball joint according to any of the preceding claims, **characterized in that** the sensor element (13, 39) has a ring-shaped or annular portion-like securing element (42) on its outer circumference, the securing element acting with a clamping force or spring force directed inwardly radially with respect to the central longitudinal axis (19) on the sensor element (13, 39), in particular on at least one or more latching books (15, 41) of the sensor element (13, 39), for securing a snap-action and/or latching connection between the sensor element (13, 39) and the receiving portion (12, 38), preferably the one or more latching hooks (15, 41) each has/have a channel (43) on its outer face, the securing element (42) being at least partially received in the channel.

8. Ball joint according to any of the preceding claims, **characterized in that** the receiving portion (12, 38) has at least one alignment portion (25, 47) for directed arrangement of the sensor element (13, 39) on the receiving portion (12, 38) in an aligned manner, wherein the alignment portion (25, 47) interacts with a correspondingly formed mounting portion (48) of the sensor element (13, 39), in particular the alignment portion (25, 47) is formed by means of at least one cutout (26, 27) in the ring-like receiving portion (12) or by means of at least one raised portion (49) arranged on the outer circumference of the ring-like receiving portion (38) .

9. Ball joint according to any of the preceding claims, **characterized in that** the ring-like receiving portion (12, 38) has a plurality of reinforcing ribs (28) directed inwardly radially with respect to the central longitudinal axis (19), in particular the reinforcing ribs (28) are ramp-like, wherein a height of the ramp-like reinforcing ribs (28) decreases starting from an inner face of the receiving portion (12, 38) and radially in the direction towards the central longitudinal axis (19) .

10. Method for producing a ball joint (1, 37) according to any of the preceding claims, wherein the sliding bearing (10) is pressed into a housing recess (2) in the joint housing (3) in a manner directed taking into consideration a specified main angular deflection direction of the joint inner part (4) with respect to the joint housing (3), a separate closure ring (9) is then pressed in for axially fixing the sliding bearing (10), a housing edge (11) is subsequently reshaped for fixing the closure ring (9) in a positive-locking manner, and following this the sensor element (13, 39) is fastened to the receiving portion (12, 38) in alignment, prespecified by means of the receiving portion (12, 38), with respect to the joint housing (3).

## Revendications

1. Articulation à rotule destinée à un mécanisme de roulement d'un véhicule, ladite articulation à rotule comprenant une partie d'articulation intérieure (4) et un palier lisse (10) d'une seule pièce en matière synthétique, une rotule d'articulation (35) de la partie d'articulation intérieure (4) étant montée de manière articulée dans une portion de roulement à billes (16) du palier lisse (10) et le palier lisse (10) comportant une portion de réception (12, 38) et un élément de détection (13, 39) disposé sur la portion de réception, le palier lisse (10) comportant sur son côté extérieur une surface d'appui annulaire (20) qui est coaxiale à un axe longitudinal central (19) du palier lisse (10) et qui coopère dans la direction axiale par rapport à l'axe longitudinal central (19) avec une bague de verrouillage séparée (9) afin de fixer le palier lisse (10) dans un boîtier d'articulation (3), **caractérisée en ce que** la bague de verrouillage séparée (9) s'étend autour du côté extérieur du palier lisse (10) et la portion de réception annulaire (12, 38) s'étend vers l'extérieur à travers une ouverture centrale ménagée dans la bague de verrouillage (9) et un côté de la bague de verrouillage (9), qui est dirigé radialement vers l'intérieur, vient en appui sur une surface cylindrique (22) du coté extérieur du palier lisse (10), la surface cylindrique (22) s'étendant coaxialement à l'axe longitudinal central (19) et/ou à angle droit depuis et/ou vers la surface d'appui annulaire (20).

2. Articulation à rotule selon la revendication 1, **caractérisée en ce que** la surface d'appui annulaire (20) est au moins partiellement formée par une saillie annulaire (21), la saillie annulaire (21) saillant radialement par rapport à l'axe longitudinal central (19) vers l'extérieur depuis le côté extérieur du palier lisse (10), en particulier la saillie annulaire (21) s'engageant dans un retrait correspondant (30) du boîtier d'articulation (3).

3. Articulation à rotule selon la revendication 1 ou 2, **caractérisée en ce que** la bague de verrouillage (9) fait saillie vers l'extérieur radialement par rapport à l'axe longitudinal central (19) par le biais d'un côté extérieur du palier lisse (10) et un bord radialement extérieur de la bague de verrouillage (9) est fixé par complémentarité de formes dans une rainure (31) et la forme correspond à celle du bord extérieur.

4. Articulation à rotule selon la revendication 3, **caractérisée en ce que** la surface cylindrique (22) comporte une rainure annulaire (32) immédiatement adjacente à la surface d'appui (20), un élément d'étanchéité (33), en particulier un joint torique, étant disposé dans la rainure annulaire (32), de préférence l'élément d'étanchéité (33) coopérant avec le côté de la bague de verrouillage (9) qui est dirigé radialement vers l'intérieur.

5. Articulation à rotule selon l'une des revendications précédentes, **caractérisée en ce que** la portion de réception (12, 38) comporte au moins une nervure (23, 45) qui fait saillie radialement vers l'extérieur par rapport à l'axe longitudinal central (19) et qui, pour former une liaison par enclenchement et/ou encliquetage, coopère avec au moins un ou plusieurs crochets d'encliquetage (15, 41), de forme correspondante, de l'élément de détection (13, 39) afin de fixer de manière amovible l'élément de détection (13, 39) à la portion de réception (12, 38).

6. Articulation à rotule selon l'une des revendications précédentes, **caractérisée en ce qu'**une garniture d'étanchéité (46), en particulier un joint torique, est disposée coaxialement et dans la direction axiale par rapport à l'axe longitudinal central (19) entre la portion de réception (12, 38) et l'élément de détection (13, 39), en particulier la garniture d'étanchéité (46) est entourée et/ou enserrée par au moins un ou plusieurs crochets d'encliquetage (15, 41) de l'élément de détection (13, 39).

7. Articulation à rotule selon l'une des revendications précédentes, **caractérisée en ce que** l'élément de détection (13, 39) comporte sur sa circonférence extérieure un élément de sécurisation (42) annulaire ou en forme de portion d'anneau qui agit, avec une force de serrage ou force de ressort dirigée vers l'intérieur radialement à l'axe longitudinal central (19), sur un élément de détection (13, 39), en particulier sur au moins un ou plusieurs crochets d'encliquetage (15, 41) de l'élément de détection (13, 39), afin de sécuriser une liaison par enclenchement et/ou encliquetage entre l'élément de détection (13, 39) et la portion de réception (12, 38), de préférence les un ou plusieurs crochets d'encliquetage (15, 41) comportent chacun sur leur côté extérieur une rainure (43) dans laquelle l'élément de sécurisation (42) est reçu au moins partiellement.

8. Articulation à rotule selon l'une des revendications précédentes, **caractérisée en ce que** la portion de réception (12, 38) comporte au moins une portion d'orientation (25, 47) destinée à disposer de manière orientée l'élément de détection (13, 39) sur la portion de réception (12, 38), la portion d'orientation (25, 47) coopérant avec une portion de montage (48), de forme correspondante, de l'élément de détection (13, 39), en particulier la portion d'orientation (25, 47) étant formée au moyen d'au moins une découpe (26, 27) dans la portion de réception annulaire (12) ou au moyen d'au moins une élévation (49) disposée sur la circonférence extérieure de la portion de réception annulaire (38).

9. Articulation à rotule selon l'une des revendications précédentes, **caractérisée en ce que** la portion de réception annulaire (12, 38) comporte une pluralité de nervures de renforcement (28) dirigées vers l'intérieur radialement par rapport à l'axe longitudinal central (19), notamment les nervures de renforcement (28) sont conçues comme une rampe, la hauteur des nervures de renforcement (28) en forme de rampe diminuant depuis le côté intérieur de la portion de réception (12, 38) et radialement en direction de l'axe longitudinal central (19).

10. Procédé de fabrication d'une articulation à rotule (1, 37) selon l'une des revendications précédentes, le palier lisse (10) étant enfoncé dans un évidement (2) du boîtier d'articulation (3) de manière orientée par rapport au boîtier d'articulation (3) par prise en compte d'une direction de déviation angulaire principale spécifiée de la partie d'articulation intérieure (4), puis une bague de verrouillage séparée (9) étant enfoncée afin de fixer axialement le palier lisse (10), un bord du boîtier (11) étant ensuite formé pour fixer la bague de verrouillage (9) par complémentarité de formes, puis l'élément de détection (13, 39) étant fixé à la portion de réception (12, 38) suivant une orientation spécifiée par rapport au boîtier d'articulation (3) au moyen de la portion de réception (12, 38).
